Europäisches Patentamt

European Patent Office

Office européen des brevets

(19)

(11) **EP 0 528 505 B1**

(12) **EUROPÄISCHE PATENTSCHRIFT**

(45) Veröffentlichungstag und Bekanntmachung des Hinweises auf die Patenterteilung:
**05.12.2001   Patentblatt 2001/49**

(51) Int Cl.⁷: **H04Q 1/457**, H04Q 1/46

(21) Anmeldenummer: **92250207.5**

(22) Anmeldetag: **07.08.1992**

(54) **Sprachdekodierung mit einem DTMF-Regenerator und Verfahren zur Regenerierung eines DTMF-Signals**

Speech decoder with DTMF-regenerator and process for regeneration of a DTMF signal

Décodeur de parole avec régénérateur pour signaux DTMF et procédé pour la régénération d'un signal DTMF

(84) Benannte Vertragsstaaten:
**AT BE CH DE DK ES FR GB GR IE IT LI LU MC NL PT SE**

(30) Priorität: **09.08.1991   DE 4126815**
         **09.08.1991   EP 91250223**

(43) Veröffentlichungstag der Anmeldung:
**24.02.1993   Patentblatt 1993/08**

(73) Patentinhaber: **Telit Mobile Terminals S.p.A.**
**34010 Sgonico (Trieste) (IT)**

(72) Erfinder: **Randers, Esben**
**DK-9000 Aalborg (DK)**

(74) Vertreter: **Hansmann, Dierk, Dipl.-Ing. et al**
**Patentanwälte**
**Hansmann-Klickow-Hansmann**
**Jessenstrasse 4**
**22767 Hamburg (DE)**

(56) Entgegenhaltungen:
**US-A- 4 853 958**

- **IEEE GLOBAL COMMUNICATIONS CONFERENCE & EXHIBITION, Bd.1/3, Dezember 1990, SAN DIEGO, CA - USA Seiten 528 - 532 CHEN ET AL. 'LD-CELP: A High Quality 16 Kb/s Speech Coder with Low Delay'**
- **IBM TECHNICAL DISCLOSURE BULLETIN, Bd.28, Nr.2, Juli 1985, NEW YORK US Seiten 897 - 899 'Universal Tone Transmitter/Receiver Module'**

**Beschreibung**

Die Erfindung betrifft ein Sprachdecodierungssystem mit einem DTMF-Regenerator und ein Verfahren zur Regenerierung eines DTMF-Signals. DTMF ist hierbei eine Abkürzung für "dual-tone-multi-frequency".

DTMF-Signale werden in der Telefonindustrie zur Übermittlung von Befehlssignalen, speziell für die Fernkontrolle von z. B. Anrufbeantwortern, verwendet. Der DTMF-Standard, wie er z. B. in Nordamerika und Europa angewendet wird, sieht vor, daß jedes Paar von DTMF-Tönen, um gültig zu sein, einen Ton (Zeilenton) aus der sogenannten niedrigen Frequenzgruppe von 697, 770, 852 und 941 Hz und einen anderen Ton (Spaltenton) aus der sogenannten Hochfrequenzgruppe von 1209, 1336, 1477 und optional 1633 Hz enthalten muß.

Sprachcodierungssysteme speziell mit einer Umwandlung, die mit niedriger Bitrate erfolgt, wie z. B. beschrieben im "speech codec for the European mobile radio System" (Conference Proceedings, ICASSP, 1988) führen zu einer beträchtlichen Verzerrung der Sinuswellen des DTMF-Signals. Dies ist darauf zurückzuführen, daß die Sprachumwandlung auf einem Modell basiert, das nur hierfür optimiert ist. Ein DTMF-Signal, das durch eine derartige Sprachkonvertierung hindurch geführt wird, unterliegt einer starken nichtlinearen, Amplitudenverzerrung. Derartige verzerrte DTMF-Töne können nicht zuverlässig durch Standard-DTMF-Detektoren, wie sie in Standard-Endgeräten vorgesehen sind, detektiert werden. Derartige Detektoren berücksichtigen normalerweise nur Rausch- und Frequenzverzerrungen. Um dennoch derartige Standard-DTMF-Detektoren in Standard-Endgeräten in Verbindung mit einem nichtlinear wirkenden Sprachcodierungssystem zu verwenden, muß das verzerrte DTMF-Signal aus sich selbst heraus regeneriert werden.

In sprachcodierten Systemen wird bisher die DTMF-Detektion nicht unmittelbar an dem Signal vorgenommen, das durch den Standard-Coder/Decoder-Schaltkreis geht, sondern sie wird im Rahmen der Signalprozedur zum Beispiel beim Aufbau der Verbindung in einem europäischen GSM-System gehandhabt (GSM recommendation paragraph 03.14, version 3.0.2, January 1990; paragraph 04.08, version 3.12.0, March 1991).

Außerdem wurde bisher bezweifelt, ob ein Standard-DTMF-Ton mit der erforderlichen Pulslänge von 40 ms benutzt werden kann, worauf ausdrücklich in der Spezifikation für den GSM-Standard (GSM recommendation paragraph 06.10, Annex A 1.3.2, version 3.2.0 January 1991) hingewiesen wird. Demzufolge würden für diesen Standard spezielle DTMF-Empfangsgerät benötigt, die ausschließlich für diesen Zweck entworfen werden müßten, um die DTMF-Kommunikation zu ermöglichen. Um dies zu vermeiden, ist ein DTMF-fähiges Sprachdecodierungssystem notwendig.

Aufgrund der vorgenannten Schwierigkeiten wurde DTMF-Detektion in sprachcodierten, nichtlinearen Systemen bisher nicht verwendet. In linearen Systemen analoger oder digitaler Art ist die DTMF-Detektion ansich bekannt. Dort wird normalerweise die DTMF-Erkennung durch einfache Filterung und anschließende Detektion bewirkt. Derartige Techniken sind für nichtlineare Systeme nicht zu verwenden. Andere Techniken für lineare Systeme, wie DTMF-Erkennung vermittels der ansich bekannten LPC (linear predictive coding), wie z. B. beschrieben von B. I. Pawate, W. Steenaart und B. Sankur in einer Veröffentlichung "The DTMF Receiver Based on Linear Prediction" (Proc. of the Twelfth Biennial Symposium on Communications,Queen's University, Kingston, Juni 4-6, 1985) wurden in Verbindung mit der Sprachcodierung für Sprachbenachrichtigung vorgeschlagen (US 4, 853,958). Hierbei wird aber das DTMF-Signal nicht durch das Sprachcodierungssystem verzerrt, weil es gar nicht das Codierungssystem durchläuft. Statt dessen wird die DTMF-Erkennung an dem uncodierten Eingang des Codierers durchgeführt, wobei LPC-Parameter, die vom Codierer bestimmt wurden, verwendet werden.

Aufgabe der Erfindung war es daher, zur Benutzung in einem digitalen Telefonsystem eine Einrichtung und ein Verfahren zu schaffen, mit der DTMF-Signale, die durch ein Sprachcodierungssystem, insbesondere mit niedriger Bitrate, hindurchgegangen sind, für Standard-DTMF-Detektoren zugänglich zu machen sind.

Diese Aufgabe wird durch die Merkmale des Anspruchs 1 sowie die Verfahrensschritte des Anspruchs 4 gelöst. Die weiteren Ansprüche geben vorteilhafte Ausführungen an.

Nach der Erfindung wird das verzerrte DTMF-Signal regeneriert. Hierzu wird ein Regenerator verwendet, der mit dem Sprachdecodierungssystem verbunden oder in dieses integriert sein kann. Der DTMF-Regenerator korrigiert die verzerrten DTMF-Signale zu einer Standard-DTMF-Signalform. Um das Gerät, welches das Sprachdecodierungssystem enthält, an Standard-DTMF fähige Endgeräte anschließbar zu machen, wie z. B. Anrufbeantworter und ähnliches, enthält der Regenerator einen Detektor, der das DTMF-Signale erkennt. Der Detektor umfaßt einen Hochpaß- und einen Tiefpaßfilter, um die DTMF-Frequenzgruppen zu trennen und eine Verarbeitungseinheit, in der Kenngrößen des decodierten Signals wie Autocorrelation und Hoch- sowie Tiefbandenergie ermittelt werden und diesen Werten zufolge ein auftretendes DTMF-Signal verifiziert werden sowie ein Spalten- und Zeilenton berechnet und verifiziert sowie aus diesen Tönen ein Zahlen- bzw. Zeichenwert geformt und verifiziert und an den Generator übergeben werden. In diesem wird die bei der Detektion auftretende Verzögerung korrigiert und ein Standard-DTMF-Signal entsprechend dem verifizierten Zahlen- bzw. Zeichenwert mit der korrekten Länge als Ausgangssignal erzeugt.

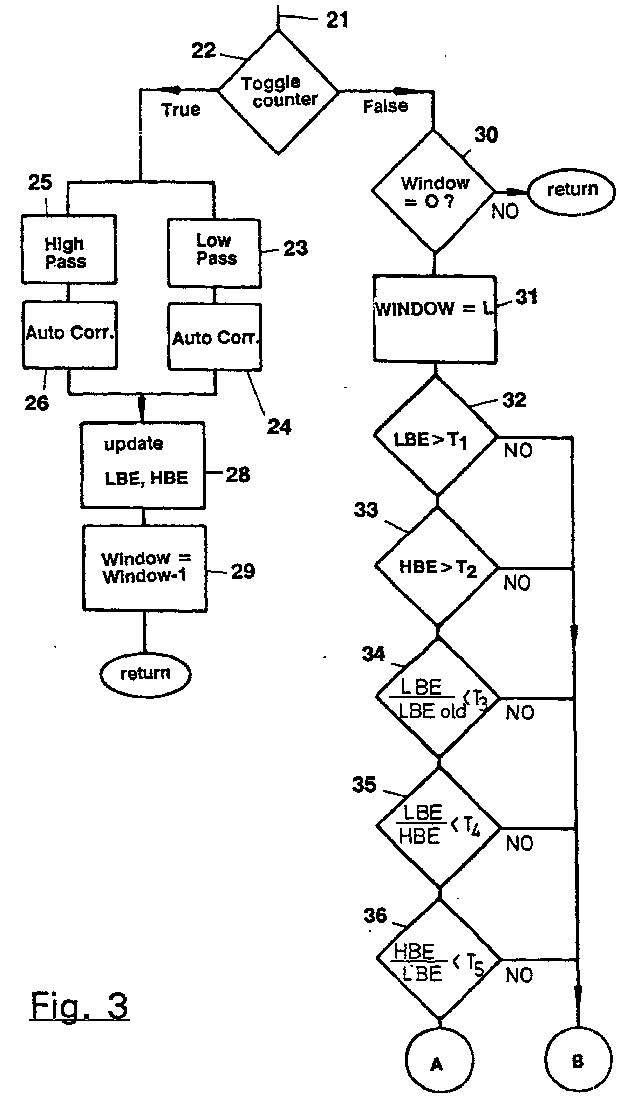

Die Erfindung wird im einzelnen anhand der Figuren 1 bis 5 erläutert. Es zeigen:

Fig. 1       eine schematische Darstellung der Zuordnung des erfindungsgemäßen Decodierungssystems mit DTMF-Regenerator zu dem Sprachcodierungssystem;

Fig. 2       ein schematisches Blockdiagramm einer Ausführung des Regenerators, bestehend aus Detektor und Generator;

Fig. 3       ein schematisches Blockdiagramm eines ersten Teils des erfindungsgemäßen Verfahrens zur Detektierung;

Fig. 4       ein schematisches Blockdiagramm eines zweiten Teils des erfindungsgemäßen Verfahrens zur Detektierung;

Fig. 5       ein schematisches Blockdiagramm des erfindungsgemäßen DTMF-Generators.

Der DTMF-Regenerator besteht aus einem DTMF-Detektor und einem Generator. Der Detektor arbeitet nach einem "sample by sample"-Verfahren. Jedes eingehende sample wird dem Detektor zugeführt. In dem Detektor wird nach jeweils einer vorgegebenen Zahl von L samples eine Prüfung auf das Vorliegen eines DTMF-Signals vorgenommen. Es wird gefordert, daß jeweils zwei L samples dasselbe Ergebnis liefern. Die eingehenden samples werden gefiltert, um eine Hochband- und eine Tiefbandgruppe zu erhalten; für beide Gruppen werden Autocorrelationskoeffizienten und Energien ermittelt. Nachdem L samples eingegangen sind, wird auf das Vorliegen eines DTMF-Signals geprüft. Dazu werden zunächst die ermittelten Energien kontrolliert. Hierbei finden folgende Kriterien Anwendung:

> Die Energien in der Hochbandgruppe (HBE) und in der Tiefbandgruppe (LBE) müssen größer als ein Minimalwert sein; LBE muß relativ stationär sein (verglichen zu früheren Detektionen);
> das Verhältnis zwischen LBE und HBE muß in einem bestimmten Bereich liegen.

Wenn die Energiekriterien erfüllt sind, werden Frequenz/Betragsüberprüfungen vorgenommen. Hierbei bezieht sich der Begriff Frequenz/Betrag auf die komplexe Ebene (Z-Ebene). Sobald bei einer Energie-Überprüfung oder Frequenz/Betragsüberprüfung die Kriterien einmal nicht erfüllt sind, werden die Frequenz/Betragskriterien auf einen größeren Bereich umgeschaltet. Dieser Grobbereich bleibt bestehen, bis erstmals sowohl Energie als auch Frequenz/Betragskriterien erfüllt sind.

Wenn auch die Frequenz/Betragskriterien erfüllt sind, die individuell für jede Frequenz abgestimmt sein können, wird der den Frequenzen entsprechende Zahlen- bzw. Zeichenwert entsprechend der DTMF-Standardisierung bestimmt, und die Frequenz/Betragskriterien werden auf einen engeren Bereich (Feinbereich) mit strengeren Anforderungen eingestellt.

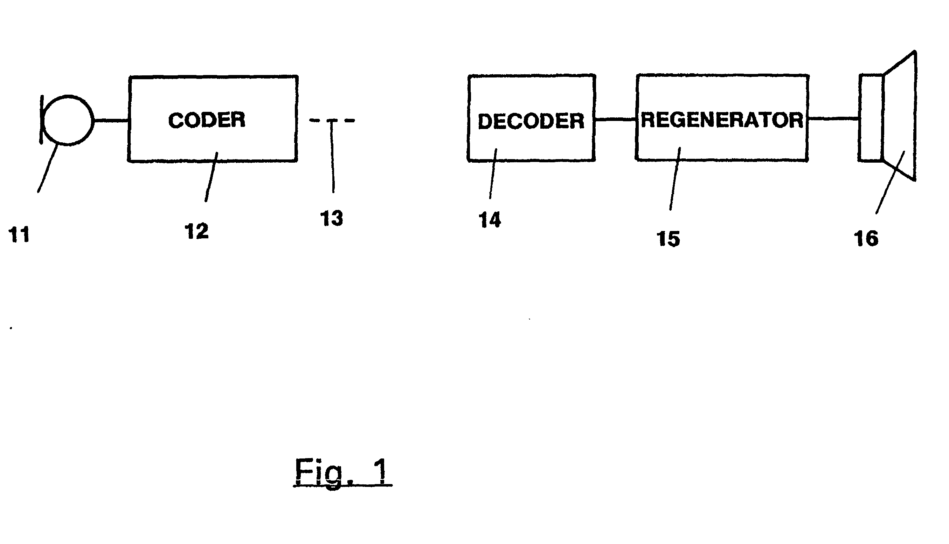

Gemäß Figur 1 ist der Regenerator 15 mit dem Decoder 14 verbunden. Vorzugsweise bildet der Generator 15 einen Teil des Decoders 14. Aus Gründen der Anschaulichkeit, nicht der Einschränkung, ist der Regenerator 15 an das Ausgabegerät 16 angeschlossen. Der Decoder 14 wird durch eine Übertragungseinrichtung 13 von dem Coder 12 gespeist, der sein Signal von einem Eingangsgerät 11 empfängt.

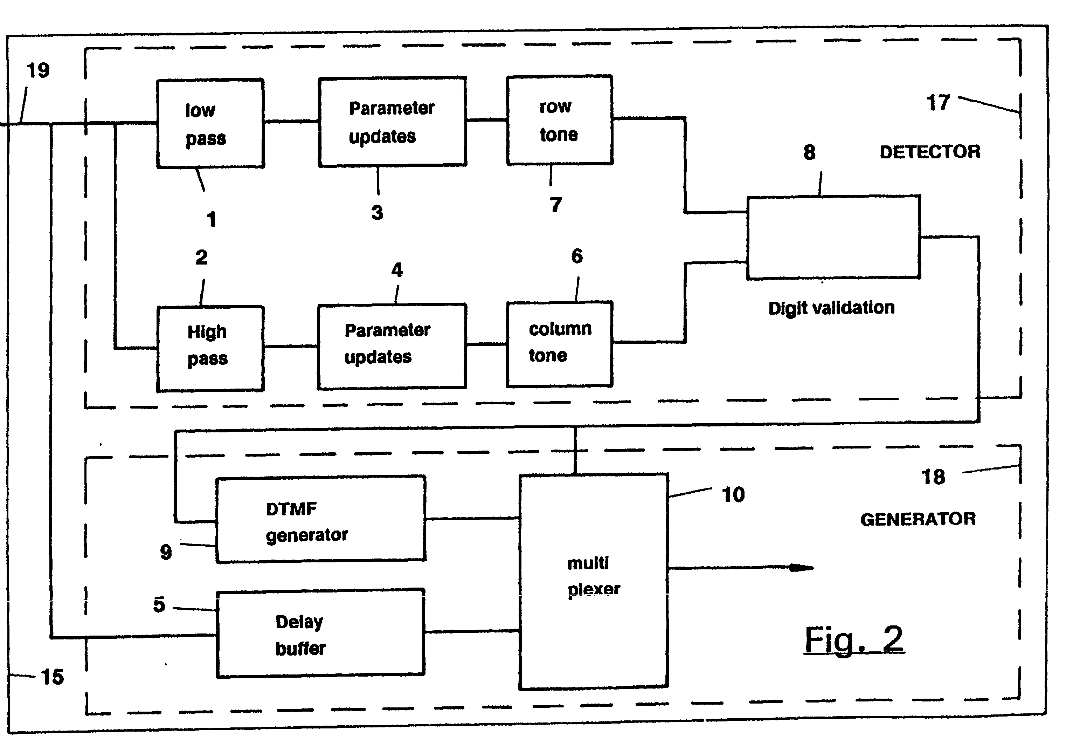

Gemäß Fig. 2 enthält der Regenerator 15 einen Detektor 17 und einen Generator 18. Der Detektor 17 enthält einen Tiefpaßfilter 1 und einen Hochpaßfilter 2, um die Hochfrequenzgruppe des DTMF-Signals von der Tieffrequenzgruppe zu trennen. Für beide Gruppen sind Einrichtungen 3 und 4 zur Aktualisierung (update) der Parameter (Autocorrelationskoeffizienten und Energien) angeordnet. Die Einrichtungen 6, 7 dienen dem Vergleich der Parameter, die ein mögliches DTMF-Signal repräsentieren mit Energie und Frequenz/Betragskriterien und der Bestimmung eines Zeilen- und eines Spaltentones. Von beiden Werten wird eine mögliche DTMF-Ziffer oder Zeichen (allgemein i. F. mit "Zeichen" benannt) bestimmt und hinsichtlich seiner korrekten Folge mit frühreren möglichen DTMF-Zeichen in einer DTMF-Zeichenvalidierungseinheit 8 überprüft. Wenn ein mögliches DTMF-Zeichen in korrekter Folge gefunden wird, wird dieses zur Steuerung des Generators 18 verwendet. Der Generator 18 enthält einen DTMF-Generator (Ton-Generator) 9, ein Verzögerungsglied 5 und einen Multiplexer 10, der einen DTMF-Ton ausgibt, wenn ein DTMF-Signal detektiert wurde, anderenfalls das decodierte Signal 19 ausgibt.

Gemäß einer speziellen Ausführung des erfindungsgemäßen Detektors ist hierfür ein Algorithmus vorgesehen, mit dem der Generator gesteuert wird. Eingangssignal des Algorithmus ist ein sample 21, das vom Ausgang des Decoders kommt. Der Detektor arbeitet nach einem sample-by-sample Verfahren, obwohl eine Detektion nur nach jeweils L samples gemacht wird. Dies wird durch das Setzen eines Anfangswertes 31 für L ein Herunterzählen für jedes sample 29 und einen Vergleich gegen Null 30 gewährleistet. Durch eine Einrichtung 22, die entweder den Wert "true" oder "false" aufweist, einerseits in den Bereich, in dem die Bestimmung der Autocorrelationskoeffizienten und der Energieabschätzung erfolgt oder alternierend in den Bereich, in dem die Detektion eines DTMF-Signals vorgenommen werden soll, verzweigt. Die Einrichtung 22 wird bei jedem einkommenden sample auf den jeweils anderen Wert umgeschaltet. Dadurch wird die Menge der Eingangssignale um einen Faktor 2 verringert. Hierdurch verringert sich auch die Zahl der notwendigen Operationen.

Wenn die Einrichtung 22 den Wert "true" aufweist, wird das Eingangssignal 21 mit einem Hochpaßfilter 25 und einem Tiefpaßfilter 23 gefiltert. An jedem Filterausgang werden die Autokorrelationskoeffizienten aktualisiert 24, 26. Die Energieabschätzungen in beiden Bändern werden ebenfalls aktualisiert 28. Sowohl die Autokorrelationskoeffizienten als auch die Energieabschätzungen werden in einem rekursiven Verfahren aktualisiert. LBE und HBE werden wie folgt aktualisiert:

$$LBE(n) = aLBE(n-1) + (1-a)xL(n)xL(n)$$

$$HBE(n) = aHBE(n-1) + (1-a)xH(n)xH(n),$$

worin n der Zeitindex ist, a<1 bestimmt, wie schnell LBE und HBE aktualisiert werden und wie stark die Abweichung von LBE und HBE ist und worin xL und xH die Ausgangssignale vom Tiefpaßfilter und Hochpaßfilter sind. Die Autocorrelationskoeffizienten RL (n,i) und RH (n,i) werden in ähnlicher Weise aktualisiert:

$$RL(n,i) = bRL(n,i) + (1-b)xL(n)*xL(n-1),i=0,1,2$$

$$RH(n,i) = bRH(n,i) + (1-b)xH(n)*xH(n-i),i=0,1,2.$$

Um eine schnelle Energieabschätzung und verläßliche Autorcorrelationskoeffizienten zu bekommen, ist normalerweise a<b<1. Nach dieser Aktualisierung wird der Zähler für die samples um 1 verringert 29, und der Algorithmus kehrt in seinen Ausgangszustand zurück, was bedeutet, daß er bereit ist, das nächste hereinkommende sample aufzunehmen. Wenn die Einrichtung 22 "false" ist, wird der sample-Zähler überprüft 30. Wenn der sample-Zähler ungleich Null ist, kehrt der Algorithmus zurück. Wenn der sample-Zähler gleich Null ist, wird dieser Wert auf den vorbestimmten Anfangswert L zurückgesetzt 31. L wird durch die minimale Tonlänge des DTMF-Signals bestimmt. Jeweils zweimal L samples müssen vollständig in die minimale Tonlänge hineinpassen. Dieses Erfordernis wurde aufgestellt, um die Detektion weniger anfällig gegen gestörte samples zu machen.

In dem Algorithmus werden fünf Energieüberprüfungen 32, 33, 34, 35, 36 vorgenommen. Wenn LBE kleiner als ein Grenzwert T1 ist, wird der Algorithmus mit B fortgesetzt. Wenn HBE kleiner als ein Grenzwert T2 ist, wird der Algorithmus ebenfalls am Punkt B fortgesetzt. Die Energieüberprüfungen 32 und 33 geben das Erfordernis einer unteren Grenze der DTMF-Tonamplitude wieder. Durch diese beiden Tests werden alle Signale aussortiert, die mit größter Wahrscheinlichkeit keine DTMF-Töne sind. Wenn das Verhältnis zwischen LBE und einem früheren LBE-Wert (LBE old) größer als ein Betrag T3 ist, wird der Algorithmus an Punkt B fortgesetzt. Diese Überprüfung wird vorgenommen, um festzustellen, ob die Energie plötzlich abfällt, was durch Beendigung eines DTMF-Tones geschehen kann. Wenn das Verhältnis zwischen LBE und HBE größer als ein Grenzwert T4 ist, wird der Algorithmus an Punkt B fortgesetzt. Wenn das Verhältnis zwischen HBE und LBE größer ist als ein Grenzwert T5 wird der Algorithmus an Punkt B fortgesetzt. Diese beiden Tests stellen sicher, daß die Energiedifferenz in der Hochfrequenzgruppe und der Tieffrequenzgruppe innerhalb bestimmter Grenzen ist. Anderenfalls wird der Algorithmus am Punkt B fortgesetzt.

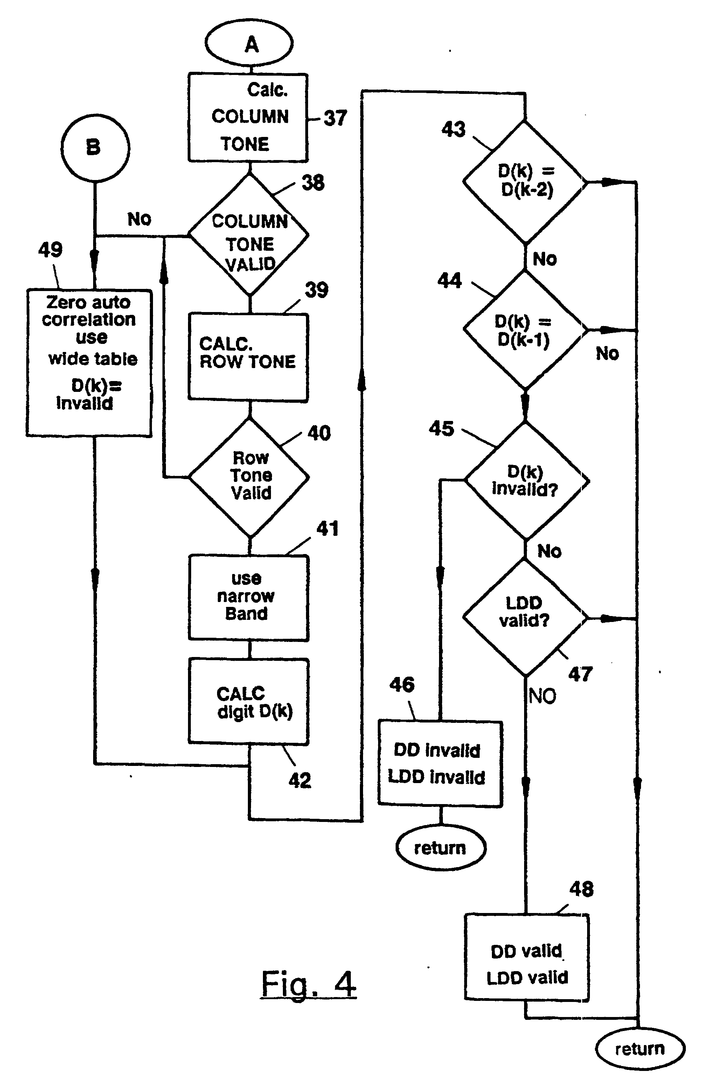

Gemäß Figur 4 werden am Punkt B die Autokorrelationskoeffizienten auf Null gesetzt; die Kriterien für die Frequenzbetragsüberprüfung werden auf den groben Bereich umgeschaltet und das mögliche Zeichen D(k) wird auf "invalid" 49 gesetzt. Die Autokorrelationskoeffizienten werden auf Null gesetzt, damit für die nächste Detektion eine verläßlichere Abschätzung möglich ist. Wenn der Algorithmus an Punkt A fortsetzt, wird der Zeilenton (Hochfrequenzgruppe) berechnet. Die Berechnung basiert auf den Autokorrelationskoeffizienten RH (n,i). Mit Hilfe der Autokorrelationskoeffizienten wird ein Satz abgeleiteter LPC-Parameter berechnet. Diese abgeleiteten LPC-Parameter entsprechen den dominantesten Frequenzen und Beträgen. Alle möglichen Zeilentöne haben zwei Frequenz- und Betragsgrenzwerte, von denen einer große Frequenz- und Betragsabweichungen (Grobwerte) und der andere nur kleine Frequenz- und Betragsabweichungen (Feinwerte) erlauben. Diese Grenzwerte können individuell für jede der zu überprüfenden Frequenz/Betragswerte eingestellt sein. Die abgeleiteten LPC-Parameter werden auf Übereinstimmung mit einem der Frequenz- und Betragsgrenzwerte überprüft. Wenn die Grenzwerte eingehalten werden, wird der Spaltenton auf einen gültigen Wert gesetzt, der der Spaltenfrequenz entspricht. Anderenfalls wird er auf einen ungültigen Wert gesetzt 37. Wenn der Spaltenton ungültig ist, wird der Algorithmus an Punkt B fortgesetzt. Das gleiche Verfahren wird für den Zeilenton angewendet, wobei die Autorkorrelationskoeffizienten RL (n,i) für die Niedrigfrequenzgruppe verwendet werden. Für diese gibt es ebenfalls verschiedene Frequenz- und Betragswerte (Grobwerte und Feinwerte). Beide können jeweils individuell für jede Frequenz/Betrag eingestellt sein. Wenn der Zeilenton ungültig ist, wird der Algorithmus an Punkt B fortgesetzt. Falls beide Töne gültig sind, wird die Grenzwerttabelle für die Frequenz/Betragsüberprüfung auf Feinwerte umgeschaltet 41, die für die nächste Detektion verwendet werden, weil ein mögicher DTMF-Ton detektiert wurde. Spalten- und Zeilenton werden kombiniert, um ein mögiches gültiges Zeichen D(k) 42 zu bilden. Der abschließende Schritt in der Detektierung ist eine Zeichenvalidierung, die sowohl für die möglichen gültigen Zeichenwerte als auch für die ungültigen Zeichenwerte duchgeführt wird. Die Validierung wird mit den drei jüngsten möglichen Zeichen D(k), D(k-1) und D(k-2) durchgeführt. Wenn D(k) = D(k-2) ist, würde entweder kein neues Zeichen detektiert 43, oder zwei aufeinanderfolgende Zeichen sind nicht gleich, und der Algorithmus kehrt zurück. Wenn D(k) < > D(k-1) ist, ist das Erforderis von zwei aufeinanderfolgenden Zeichen gleichen Wertes nicht erfüllt, und der Algorithmus kehrt zurück. Anderenfalls wird der Wert von D(k) überprüft 45. Wenn D(k) ungültig ist, wird eine Variable LDD (last detected digit) auf ungültig gesetzt, und die Variable DD (detected digit) wird auf ungültig gesetzt 46, und der Algorithmus kehrt zurück. Wenn D(k) gültig ist, wird LDD überprüft 47. Wenn LDD gültig ist, liegt eine Folge von Zeichen ohne die erforderliche Pause zwischen DTMF-Signalen vor, und der Algorithmus kehrt zurück. Wenn LDD ungültig ist, wird LDD auf gültig gesetzt, und DD wird auf den gültigen Wert des Zeichens D(k) gesetzt 48, und der Algorithmus kehrt zurück. DD wird nur verändert, wenn eine Folge von zwei gültigen und gleichen Zeichen in Kombination mit zwei ungültigen Zeichen auftritt.

Der Algorithmus stellt sicher, daß wenn DD auf ungültig gesetzt wurde, bevor der Algorithmus aufgerufen wird, dieser nur einen gültigen Wert DD herausgibt, wenn nur einmal ein neuer DTMF-Ton detektiert ist. Wenn DD von Aufruf zu Aufruf des Algorithmus nicht geändert wird, wird DD ausgegeben, so lange das DTMF-Signal detektiert wird. Letztere Lösung wird bevorzugt in Verbindung mit dem DTMF-Regenerator.

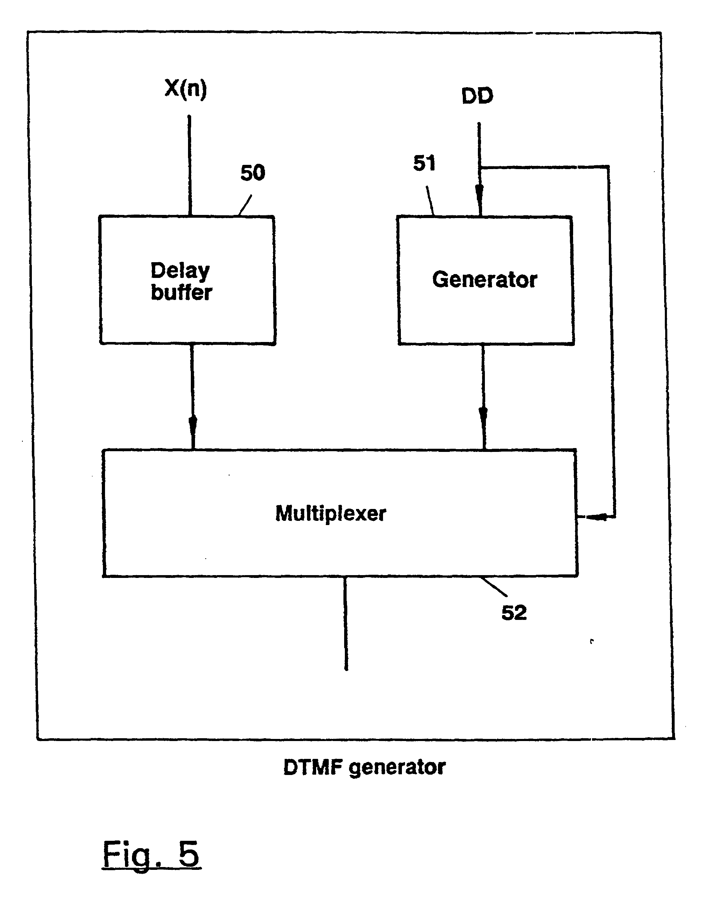

Die Eingabe des DTMF-Generators 18 ist gemäß Figur 5 der Wert DD und die aufgenommenen samples x(n). Da der Detektor nur alle L samples eine Detektierung macht und zwei aufeinanderfolgende Detektierungen benötigt, um ein gültiges Zeichen zu bilden, gibt es eine eine inhärente Verzögerung durch die Detektierung. Die theoretische maximale Größe dieser Verzögerung ist 3L, obwohl die tatsächliche maximale Verzögerung kleiner als 3L, aber größer als 2L sein wird. Der DTMF-Generator 18 muß diese Verzögerung kompensieren, damit sprachentzerrte DTMF-Töne nicht von einem angeschlossenen Gerät verpaßt werden. Der DTMF-Generator besteht aus einem Verzögerungsglied 50, einem Tongenerator 51 und einem Multiplexer 52. Die Größe des Verzögerungsgliedes ist 3L samples entsprechend der theoretischen maximalen Verzögerung. Eingangsgröße für das Verzögerungsglied ist das Ausgangssignal vom Decoder x(n), und Ausgangsgröße des Verzögerungsgliedes ist x(n-3L), welches relativ gesehen ein altes Ausgangssignal von dem Decoder ist. So lange DD ungültig ist, wählt der Multiplexer 52 den Ausgang vom Verzögerungsglied. So lange DD gültig ist, wählt der Multiplexer den Ausgang vom Tongenerator 51. Der Tongenerator erzeugt den DTMF-Ton, der dem Wert DD entspricht. Auf diese Weise wird kein sprachcodierter DTMF-Ton verpaßt.

**Patentansprüche**

1. Sprachdecodierungssystem mit Einrichtungen (15) zur Regenerierung eines Standard-DTMF-Signals aus einem Eingangssignal, das ein verzerrtes DTMF-Signal enthält **dadurch gekennzeichnet, daß** die Einrichtungen zur Regenerierung (15) Einrichtungen zur Detektierung (17) eines DTMF-Signals und Einrichtungen zur Generierung (18) eines Standard-DTMF-Signals enthalten, wobei die Einrichtungen zur Detektierung (17) Einrichtungen (8) zum Überprüfen des detektierten DTMF-Signals auf korrekte Abfolge mit früheren detektierten DTMF-Signalen enthalten und die Einrichtungen zur Generierung (18) eines Standard-DTMF-Signals einen DTMF-Generator (9) und einen Multiplexer (10) aufweisen, wobei ein Ausgangssignal des DTMF-Generators (9) und das Eingangssignal zum Multiplexer (10) geführt sind und sowohl der DTMF-Generator (9) als auch der Ausgang des Multiplexers mit Ausgangssignalen von den Einrichtungen (8) zum Überprüfen des detektierten DTMF-Signal steuerbar sind.

2. Sprachdecodierungssystem nach Anspruch 1, **dadurch gekennzeichnet, daß** die Einrichtungen (18) zur Generierung eines Standard-DTMF-Signals einen Tongenerator (51) enthalten, der mit den Einrichtungen (17) zur Detektierung eines DTMF-Singals verbunden ist, sowie ein Verzögerungsglied (50), das mit dem Eingangssignal verbunden ist, sowie einen Multiplexer (52), der mit dem Verzögerungsglied (50), mit dem Tongenerator (51) und mit den Einrichtungen zur Detektierung eines DTMF-Signals (17) verbunden ist.

3. Sprachdecodierungssystem nach Anspruch 1 oder 2, **dadurch gekennzeichnet, daß** die Einrichtungen zur Detektierung (17) eines DTMF-Signals aus dem Eingangssignal Einrichtungen (1, 2) enthalten, mit denen das Eingangssignal in eine Hochfrequenz und in eine Niederfrequenzgruppe trennbar ist sowie Einrichtungen zur Bestimmung von Autokorrelationskoeffizienten und Energien (3, 4) für beide Frequenzgruppen sowie Einrichtungen zum Vergleich der Energien für beide Gruppen mit vorbestimmten Grenzwerten sowie Einrichtungen zum Vergleich der Frequenzgruppen mit festgelegten Frequenz- und Betragskriterien sowie Einrichtungen für die Berechnung eines Zeichens (6, 7) aus beiden Frequenzgruppen sowie Einrichtungen (8) zum Vergleich dieses Zeichens mit früheren Zeichen.

4. Verfahren zur Regenerierung eines Standard-DTMF-Signals aus einem Eingangssignal, das ein verzerrtes DTMF-Signal enthält und zur Kontrolle eines Generators, **dadurch gekennzeichnet, daß** das verzerrte DTMF-Signal detektiert wird, das detektierte DTMF-Signal auf korrekte Abfolge mit früheren detektierten DTMF-Signalen überprüft wird, das bei Vorliegen einer korrekten Folge von detektierten DTMF-Signalen ein detektiertes Zeichen DD gebildet wird, das ein DTMF-Generator mit dem detektierten Zeichen gesteuert wird, um ein Standard-DTMF-Signal zu bilden, daß der Ausgang dieses DTMF-Generators und das Eingangssignal in einen Mutiplexer eingegeben werden und der Ausgang des Multiplexers von dem detektierten Zeichen DD gesteuert wird.

5. Verfahren nach Anspruch 4, **dadurch gekennzeichnet, daß** als Eingangssignal (21) der digitale Ausgang eines Decoders verwendet wird, daß zur Detektierung des verzerrten DTMF-Signals jedes zweite digitale Ausgangssignals des Decoders als sample genommen wird (22), diese samples gefiltert werden (23, 25), um eine Hochfrequenzgruppe an samples von einer Niedrigfrequenzgruppe von samples zu trennen, Autorkorrelationskoeffizienten (24, 26) und Energieabschätzungen (28) rekursiv aktualisiert werden für beide Frequenzgruppen, daß die samples gezählt werden (29), nach einer betimmten Anzahl von samples die Energieabschätzungen auf Übereinstimmung mit vorbestimmten Kriterien überprüft (32, 33, 34, 35, 36) wird, bei Übereinstimmung mit den Energiekriterien aus dem Autokorrelationskoeffizienten Frequenz und Betragswerte bestimmt werden (37), diese Frequenz- und Betragswerte auf Übereinstimmung mit vorbestimmten Kriterien überprüft werden, bei Übereinstimmung mit diesen Kriterien ein mögliches gültiges Zeichen, (37, 39) anderenfalls ein mögliches ungültiges Zeichen gebildet wird (49), Überprüfung dieser Zeichen auf eine erforderliche Abfolge nach früheren Zeichen gleichen Wertes, Überprüfung aufeinanderfolgender Zeichen gleichen Wertes (43, 44) auf Kombination mit zwei aufeinanderfolgender gültiger Zeichen mit zwei aufeinanderfolgender ungültiger Zeichen (45, 46, 47), worauf, falls diese Kombination gefunden wird, ein detektiertes Zeichen DD festgestellt wird (48) und ein neues sample erwartet wird.

6. Verfahren nach Anspruch 5, **dadurch gekennzeichnet, daß** die Autorkorrelationskoeffizienten auf Null gesetzt (49) werden, wenn die Energie oder Frequenz/Betragskriterien nicht erfüllt sind.

7. Verfahren nach Anspruch 5 oder 6, **dadurch gekennzeichnet, daß** die Frequenz/Betragsüberprüfungen (37, 39) mit individuellen Kriterien für jede Frequenz und Betrag durchgeführt werden.

8. Verfahren nach Anspruch 5 oder 7, **dadurch gekennzeichnet, daß** nach Bestimmung eines möglichen gültigen Zeichens die Frequenz und Betragskriterien auf einen Feinwert (41) gesetzt werden.

9. Verfahren nach Anspruch 5 oder 8, **dadurch gekennzeichnet, daß** die Überprüfung der korrekten Abfolge von möglichen gültigen oder möglichen ungültigen Zeichen auf die drei jüngsten Zeichen D(k), D(k-1), D(k-2) (43, 44, 45) angewendet wird.

10. Verfahren nach Anspruch 9, **dadurch gekennzeichnet, daß** kein detektiertes Zeichen festgestellt wird, wenn D(k-2) = D(k) ist, kein detektiertes Zeichen festgestellt wird, wenn D(k-1) ungleich D(k) ist und kein detektiertes Zeichen festgestellt wird, wenn zusätzlich D(k) ungültig ist.

11. Verfahren nach Anspruch 10, **dadurch gekennzeichnet, daß** für ein gültiges Zeichen D(k) eine Variable LDD auf gültig gesetzt wird und eine Variable DD auf gültig gesetzt wird (48), wenn LDD ungültig war (47).

12. Verfahren nach Anspruch 11, **dadurch gekennzeichnet, daß** DD an einen Tongenerator (51) und einen Multliplexer (52) übergeben wird, die samples an ein Verzögerungsglied (50) übergeben werden, das um den dreifachen Betrag der festgelegten Anzahl von samples verzögert, daß der Ausgang des Multiplexers (52) von DD gesteuert wird, wobei die samples ausgegeben werden, so lange DD ungültig ist, anderenfalls das Signal vom Tongenerator (51) ausgegeben wird.

**Claims**

1. Speech decoding system with devices (15) for the regeneration of a standard DTMF signal from an input signal that contains a distorted DTMF signal, **characterized in that** the devices for the regeneration (15) contains devices for the detection (17) of a DTMF signal and devices for the generation (18) of a standard DTMF signal, wherein the devices for the detection (17) contain devices (8) for checking the detected DTMF signals for correct sequencing with previous detected DTMF signals and the devices for the generation (18) of a standard DTMF signal have a DTMF generator (9) and a multiplexer (10), wherein an output signal of the DTMF generator (9) and the input signal are fed to the multiplexer (10) and both the DTMF generator (9) and the output of the multiplexer can be controlled with output signals of the devices (8) for checking the detected DTMF signal.

2. Speech decoding system according to Claim 1, **characterized in that** the devices (18) for the generation of a standard DTMF signal contain a tone generator (51) that is connected to the devices (17) for the detection of a DTMF signal, and a delay element (50) that is connected to the input signal, and a multiplexer (52) that is connected to the delay element (50), to the tone generator (51) and to the devices for the detection of a DTMF signal (17).

3. Speech decoding system according to Claim 1 or 2, **characterized in that** the devices for the detection (17) of a DTMF signal from the input signal contains devices (1, 2) with which the input signal is separable into a high frequency and into a low frequency group, and devices for determining autocorrelation coefficients and energies (3, 4) for both frequency groups, and devices for comparing the energies for both groups with predetermined limit values and devices for comparing the frequency groups with defined frequency and absolute value criteria and devices for calculating a digit (6, 7) from both frequency groups and devices (8) for comparing said digit with previous digits.

4. Method for the regeneration of a standard DTMF signal from an input signal that contains a distorted DTMF signal and for monitoring a generator, **characterized in that** the distorted DTMF signal is detected, the detected DTMF signal is checked for correct sequencing with previous detected DTMF signals, **in that** if a correct sequencing of detected DTMF signals is present, a detected digit DD is formed, **in that** a DTMF generator is controlled by the detected digit in order to form a standard DTMF signal, and **in that** the output of said DTMF generator and the input signal are inputted into a multiplexer and the output of the multiplexer is controlled by the detected digit DD.

5. Method according to Claim 4, **characterized in that** the digital output of a decoder is used as input signal (21), **in that** every second digital output signal of the decoder is taken as a sample for the detection of the distorted DTMF signal (22), said samples are filtered (23, 25) to separate a highfrequency group of samples from a low-frequency group of samples, and autocorrelation coefficients (24, 26) and energy estimations (28) are recursively updated for both frequency groups, **in that** the samples are counted (29), after a certain number of samples, the energy estimations are checked for compliance with predetermined criteria (32, 33, 34, 35, 36), if there is compliance with the energy criteria, frequency and absolute values are determined from the autocorrelation coefficients (37), said frequency and absolute values are checked for compliance with predetermined criteria, if there is compliance with said criteria, a possible valid digit is formed (37, 39) and otherwise a possible invalid digit is formed (49), checking of said digit for a required sequencing after previous digits of the same value, checking of consecutive digits of the same value (43, 44) for combination with two consecutive valid digits with two consecutive invalid digits (45, 46, 47) whereupon, if said combination is found, a detected digit DD is confirmed (48) and a new sample is expected.

6. Method according to Claim 5, **characterized in that** the autocorrelation coefficients are set to zero (49) if the energy or frequency/absolute value criteria are not fulfilled.

7. Method according to Claim 5 or 6, **characterized in that** the frequency/absolute value checks (37, 39) are performed with individual criteria for every frequency and absolute value.

8. Method according to Claim 5 or 7, **characterized in that**, after determining a possible valid digit, the frequency and absolute value criteria are set to a fine value (41).

9. Method according to Claim 5 or 8, **characterized in that** the checking of the correct sequencing of possible valid or possible invalid digits is applied to the three most recent digits D(k), D(k-1), D(k-2) (43, 44, 45).

10. Method according to Claim 9, **characterized in that** no detected digit is confirmed if D(k-2) = D(k), no detected digit is confirmed if D(k-1) is not equal to D(k) and no detected digit is confirmed if, in addition, D(k) is invalid.

11. Method according to Claim 10, **characterized in that** a variable LDD is set to valid for a valid digit D(k) and a variable DD is set to valid (48) if LDD was invalid (47).

12. Method according to Claim 11, **characterized in that** DD is passed to a tone generator (51) and a multiplexer (52) and the samples are passed to a delay element (50) that delays by three times the absolute value of the confirmed number of samples, and **in that** the output of the multiplexer (52) is controlled by DD, wherein the samples are emitted as long as DD is invalid, but otherwise the signal is emitted by the tone generator (51).

**Revendications**

1. Système de codage linguistique avec dispositifs (15) de reproduction d'un signal DTMF standard à partir d'un signal d'entrée, comprenant un signal DTMF déformé, **caractérisé en ce que** les dispositifs de reproduction (15) comprennent des dispositifs de détection d'un signal DTMF ainsi que des dispositifs de production d'un signal DTMF standard, les dispositifs de détection (17) étant eux même dotés de dispositifs (8) de contrôle de la séquence du signal DTMF détecté avec des signaux DTMF détectés antérieurement, les dispositifs de production (18) d'un signal DTMF standard incluant un générateur DTMF (9) et un multiplexeur (10), un signal d'entrée étant conduit au multiplexeur (10) et le générateur DTMF (9) étant contrôlable, au même titre que la sortie du multiplexeur, avec des signaux de sortie des dispositifs (8) destinés à contrôler le signal DTMF détecté.

2. Système de codage linguistique selon la revendication 1, **caractérisé en ce que** les dispositifs (18) destinés à générer un signal DTMF standard comprennent un générateur de tonalité (51) connecté aux dispositifs (17) de détection d'un signal DTMF, un élément de retard (50) relié au signal d'entrée, et un multiplexeur (52) relié à l'élément de retard (50), au générateur de tonalité (51) et aux dispositifs de détection d'un signal DTMF (17).

3. Système de codage linguistique selon la revendication 1 ou 2, **caractérisé en ce que** les dispositifs de détection (17) d'un signal DTMF à partir du signal d'entrée comprennent des dispositifs de séparation du signal d'entrée en un groupe de haute fréquence et un groupe de basse fréquence, de détermination des coefficients d'autocorrélation et des énergies (3, 4) pour les deux groupes de fréquences, de comparaison des énergies des deux groupes avec des valeurs liminales prédéfinies, de comparaison des groupes de fréquences avec des critères de fréquences et de valeurs bien définis, de calcul d'un signe (6, 7) à partir des deux groupes de fréquences et de comparaison de ce signe avec des signes précédents.

4. Procédé de reproduction d'un signal DTMF standard à partir d'un signal d'entrée, comprenant un signal DTMF déformé, destiné au contrôle d'un générateur, et **caractérisé en ce que** le signal DTMF déformé est détecté, l'exactitude de la séquence du signal DTMF avec des signaux DTMF détectés précédemment est contrôlée et un signe détecté DD est formé en cas de séquence correcte de signaux DTMF détectés, afin de générer un signal DTMF standard, la sortie de ce générateur DTMF et le signal d'entrée étant introduits dans un multiplexeur et **en ce que** la sortie du signe détecté DD du multiplexeur étant contrôlée.

5. Procédé selon la revendication 4, **caractérisé en ce que** la sortie numérique d'un décodeur est utilisée comme signal d'entrée (21), **en ce que** un signal de sortie numérique sur deux du décodeur est pris comme échantillon pour détecter le signal DTMF déformé (22), **en ce que** ces échantillons sont filtrés (23, 25) en un groupe 'haute fréquence' et un groupe 'basse fréquence' et des coefficients d'autocorrélation (24, 26) et autres évaluations d'énergie (28) sont actualisés régulièrement pour les deux groupes de fréquences, **en ce que** les échantillons sont comptés (29) et l'adéquation des évaluations d'énergie avec des critères prédéfinis est contrôlée après un nombre bien précis d'échantillons (32, 33, 34, 35, 36), **en ce que**, en cas de conformité avec les critères énergétiques, des valeurs de fréquences et de grandeurs sont déterminées à partir des coefficients d'autocorrélation (37), la conformité de ces valeurs de fréquences et de grandeurs à des critères préétablis est contrôlée, **en ce que**, en cas de conformité avec ces critères, un signal potentiel valable (37, 39) ou, à défaut, un signe potentiel non valable (49) est généré, **en ce que** ce la séquence nécessaire de ce signe avec des signes antérieurs de même valeur est contrôlée, la succession de deux signes valables de même valeur et de deux signes non valables de même valeur est contrôlée (45, 46, 47), et **en ce que**, en cas d'existence de cette combinaison, un signe détecté DD est constaté (48) et un nouvel échantillon est attendu.

6. Procédé selon la revendication 5, **caractérisé en ce que** les coefficients d'autocorrélation sont fixés à une valeur zéro (49) lorsque les critères d'énergie ou de fréquence/grandeur ne sont pas respectés.

7. Procédé selon la revendication 5 ou 6, **caractérisé en ce que** les contrôles de conformité de fréquence / grandeur (37, 39) avec des critères individuels sont effectués pour chaque fréquence et chaque grandeur.

8. Procédé selon la revendication 5 ou 7, **caractérisé en ce que** les critères de fréquence et de grandeur sont fixés de manière précise (41), après détermination d'un signe potentiel valable.

9. Procédé selon la revendication 5 ou 8, **caractérisé en ce que** l'exactitude de la séquence de signes potentiels valables ou de signes potentiels non valables potentiels est contrôlée à partir des trois signes les plus récents D(k), D(K-1), D (K-2) (43, 44, 45).

10. Procédé selon la revendication 9, **caractérisé en ce que** aucun signe détecté n'est constaté lorsque D(k-2) = D(k), aucun signe détecté n'est constaté lorsque D(k-1) n'est pas égal à D(k) et aucun signe détecté n'est constaté lorsque D(k) est de surcroît non valable.

11. Procédé selon la revendication 10, **caractérisé en ce que** pour un signe valable D(k), une variable LDD est réglée de manière valable et **en ce que** si LDD n'était pas variable (47), une variable DD est réglée de manière valable (48).

12. Procédé selon la revendication 11, **caractérisé en ce que** DD est transmis à un générateur de tonalité (52) et un multiplexeur transmettant à leur tour les échantillons à un élément de retard retardant dans une proportion équivalente à trois fois le nombre fixé d'échantillons, **en ce que** la sortie du multiplexeur est contrôlé par DD,. les échantillons étant émis aussi longtemps que DD n'est pas valable. Dans le cas contraire, le signal est émis par le générateur de tonalité (51).

Fig. 1

DETECTOR

17

8

Digit validation

row
tone

7

6

column
tone

Parameter
updates

3

4

Parameter
updates

low
pass

1

2

High
pass

19

GENERATOR

18

10

multi
plexer

DTMF
generator

9

Delay
buffer

5

15

Fig. 2

## Fig. 3

Fig. 4

**DTMF generator**

## Fig. 5